# EUROPEAN PATENT APPLICATION

(11) **EP 3 043 591 A1**
(43) Date of publication of application: **13.07.2016**
(21) Application number: 14801016.8
(22) Date of filing: 11.06.2014
(51) Int. Cl.: H04W 28/08

(54) **MULTICAST GROUP OPTIMIZATION METHOD AND ANCHOR**

(30) Priority: 05.09.2013 CN 201310400656
(71) Applicant: ZTE Corporation, Shenzhen, Guangdong 518057 (CN)
(72) Inventor: CUI, Yong, Shenzhen Guangdong 518057 (CN); LIU, Yan, Shenzhen Guangdong 518057 (CN); XU, Xin, Shenzhen Guangdong 518057 (CN); WANG, Wendong, Shenzhen Guangdong 518057 (CN); LIU, Guoyan, Shenzhen Guangdong 518057 (CN); SHEN, Min, Shenzhen Guangdong 518057 (CN); ZHOU, Na, Shenzhen Guangdong 518057 (CN); ZHU, Chunhui, Shenzhen Guangdong 518057 (CN)
(74) Representative: Brunazzi, Stefano
(86) International application number: PCT/CN2014/079650
(87) International publication number: WO 2014/187416

(57) **Abstract**

Provided are a method for optimizing the multicast group and an anchor. A set of nodes requesting for the same multicast group data and sharing the same Access Gateway (AG) is identified in a multicast group, and the same multicast group data is transmitted to each node in the set of nodes via the same AG, thereby forwarding multicast data to different nodes via the same gateway, saving traffic of a network side, and optimizing the multicast group. In addition, the node optimization method allows the anchor to optimize multicast routing of the nodes requesting for the same multicast group data and sharing the same AG to the same shared gateway for forwarding if a node has a plurality of access interfaces in the present application, thus reducing unnecessary multicast routing, reducing the scale of a multicast forwarding tree, and reducing waste of network resources of the network side to the largest extent.

## Description

### Technical Field

The disclosure relates to a method for optimizing a multicast group and an anchor, particularly to a method for optimizing the multicast group and an anchor.

### Background

With the rapid development of wireless networks, voice and video applications such as teleconferences, online distance educations, and network games are used more and more frequently on intelligent mobile terminals including mobile phones and so on while these applications need to occupy a large amount of network bandwidths and requirements of user experience may be hardly satisfied if a conventional unicast technology is applied. The problems are solved by an Internet Protocol (IP) multicast technology on a wired network. In Proxy Mobile Internet Protocol (PMIP), an anchor functions as a home proxy while an Access Gateway (AG) functions as a medium between the anchor and a Mobile Node (MN). For years, PMIP, which may implement imperceptible mobility of a node thanks to the absence of a terminal, has an advantage of well solving insufficient computing capability and limited energy of an MN, and has been thus widely applied. At present, proxy mobile IP Version 6 (IPV6) has become one of the main directions of researches on mobile networks.

Although existing PMIP domain multicast deployment schemes allow an MN to access a multicast domain in a PMIP domain imperceptibly, and solve problems including tunnel convergence and so on, these schemes are relatively simple and utilizes a single method to create a multicast group link directly for an accessed node to perform communication. In addition, an anchor transmits data of a multicast group according to routing only for multicast routing in a multicast tree during a transmission process of the multicast group. However, different nodes using the same gateway often transmit data of the multicast group to the gateway repeatedly, thus causing waste of network resources.

### Summary

Embodiments of the disclosure provide a method for optimizing the multicast group and an anchor, thereby solving the technical problem in the traditional art that waste of network resources is caused by repeatedly transmitting data of a multicast group to different nodes sharing the same gateway.

The embodiments of the disclosure apply the following technical solutions to solve the technical problem.

The present application provides a method for optimizing the multicast group, wherein the method comprises: an anchor identifies a set of nodes requesting for the same multicast group data and sharing the same AG in a multicast group, wherein the set of nodes includes at least two nodes requesting for the same multicast group data and sharing the same AG; and the anchor transmits the same multicast group data to each node in the set of nodes via the same AG.

At least one node in the set of nodes may have two or more access interfaces, and the two or more access interfaces may be connected to different AGs respectively.

The anchor identifies nodes sharing the same AG in the multicast group may include that AG care-of addresses of access interfaces of the nodes in the multicast group are acquired from binding cache items of the anchor; and whether the nodes in the multicast group share the same AG is judged according to the AG care-of addresses.

The anchor identifies the nodes requesting for the same multicast group data in the multicast group may include that multicast group data of the nodes in the multicast group is acquired from a table of corresponding relations between Identifiers (ID) of the binding cache items of the anchor and multicast group IDs; and whether the nodes in the multicast group request for the same multicast group data is judged according to the multicast group data.
before the anchor identifies the set of nodes requesting for the same multicast group data and sharing the same AG in the multicast group, the method may further include that: it is judged whether each node of the set of nodes is accessed by another new access interface according to received request information from each node of the set of nodes.

The present application further provides an anchor, including an identifying component and a transmitting component; the identifying component is configured to identify a set of nodes requesting for the same multicast group data and sharing the same AG in a multicast group, wherein the set of nodes includes at least two nodes requesting for the same multicast group data and sharing the same AG; and the transmitting component is configured to transmit the same multicast group data to each node in the set of nodes via the same AG.

At least one node in the set of nodes may have two or more access interfaces, and the two or more access interfaces may be connected to different AGs.

The identifying component further may include a first acquiring element and a first judging element; the first acquiring element is configured to acquire AG care-of addresses of access interfaces of the nodes in the multicast group from binding cache items of the anchor; and the first judging element is configured to judge, according to the AG care-of addresses, whether the nodes in the multicast group share the same AG.

The identifying component further may include: a second acquiring element and a second judging element; the second acquiring element is configured to acquire multicast group data of the nodes in the multicast group from a table of corresponding relations between IDs of the binding cache items of the anchor and multicast group IDs; and the second judging unit is configured to judge, according to the multicast group data, whether the nodes in the multicast group request for the same multicast group data.

The anchor of the present application may further include: a judging component; and the judging component is configured to judge, according to received request information from each node of the set of nodes, whether the each node of the set of nodes is accessed by another new access interface.

The embodiments of the disclosure have achieved the following beneficial effect: an anchor identifies a set of nodes requesting for the same multicast group data and sharing the same AG in a multicast group; and transmits the same multicast group data to each node in the set of nodes via the same AG, so that multicast data are forwarded to different nodes by the same gateway, thereby saving traffic of a network side, and optimizing the multicast group.

Besides, the current development tendency shows that multi-interface access of a MN has become a trend, thus the node optimization method allows the anchor to optimize multicast routing of the nodes requesting for the same multicast group data and sharing the same AG to the same shared gateway for forwarding if a node has a plurality of access interfaces in the present application, so as to reduce unnecessary multicast routing, reduce the scale of a multicast forwarding tree, and reduce waste of network resources of the network side to a great extent.

### Brief Description of the Drawings

Fig. 1 shows a structural diagram of an anchor according to an embodiment of the disclosure;
Fig. 2 shows a structural diagram of an anchor according to another embodiment of the disclosure;
Fig. 3 shows a flowchart of a method for optimizing a multicast group according to an embodiment of the disclosure;
Fig. 4 shows a flowchart of a method for optimizing a multicast group according to another embodiment of the disclosure;
Fig. 5 shows a diagram of a multicast deployment scenario of IPv6 nodes according to an embodiment of the disclosure;
Fig. 6 shows a flowchart of signaling interaction according to a method for optimizing a multicast group in an embodiment of the disclosure;
Fig. 7 shows a flowchart of signaling interaction in a method for optimizing the multicast group in another embodiment of the disclosure; and
Fig. 8 shows a flowchart of signaling interaction in a method for optimizing the multicast group according to still another embodiment of the disclosure.

### Detailed Description of the Embodiments

In the embodiments of the disclosure, an anchor matches nodes in a multicast group and finds the best multicast routing to enable the anchor to transmit the same multicast group data to different nodes via the same AG. Specifically, the anchor compares AG care-of addresses of the nodes to judge whether the nodes share the same AG, and then compares multicast group data of the nodes in the multicast group to judge whether the nodes in the multicast group request for the same multicast group data, thereby implementing a process that the anchor plans the best multicast routing for the nodes in the multicast group respectively. Specifically, the anchor in the embodiments of the disclosure extends binding cache items, and adds an table entry, which is a corresponding between IDs of the nodes and IDs of multicast groups in which the nodes join, to the binding cache items, so that the anchor may search, according to the IDs of the nodes, the table for multicast group data corresponding to the nodes. Each of the nodes in the multicast group may be a node which has created a multicast group connection and transmits multicast group data or may be also a new node applied to join the multicast group and requesting for multicast group data. When a node in the set of nodes has a plurality of access interfaces, the primary multicast routing of the node may be optimized, according to the method for optimizing the multicast routing, to other access interfaces sharing the same access interface with the node, so as to transmit multicast data.

The disclosure will be further expounded below according to specific embodiments and with reference to the accompanying drawings so that the technical solutions and advantages of the disclosure are clearer.

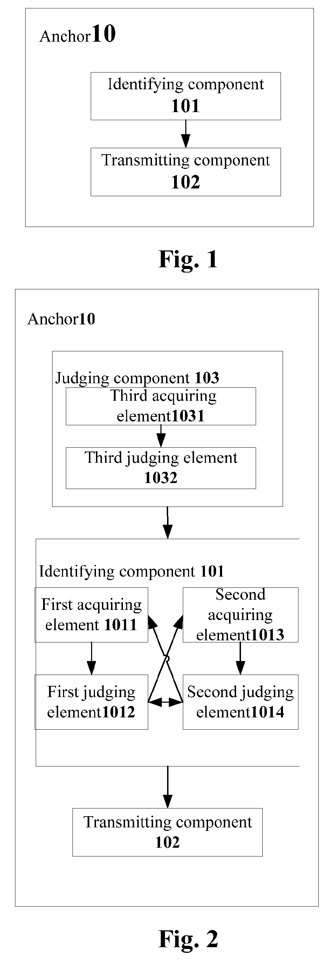

Please refer to Fig. 1, an anchor 10 is provided in the present application, including: an identifying component 101 and a transmitting component 102, wherein the identifying component 101 is configured to identify a set of nodes requesting for the same multicast group data and sharing the same AG in a multicast group, wherein the set of nodes includes at least two nodes requesting for the same multicast group data and sharing the same AG, while the transmitting component 102 is configured to transmit the same multicast group data to each node in the set of nodes via the same AG.

Please refer to Fig. 2, the anchor 10 in the present application may further include a judging component 103 mainly configured to judge, according to received request information of a node, whether the node is accessed by another new access interface. The judging component 103 in the present application mainly compares an ID of an access node and an ID of the node in a binding cache item to determine a new access interface, and if a new access interface is added, determines that there is access of another new access interface. Specifically, the judging component 103 may further include the following sub-elements: a third acquiring element 1031 and a third judging element 1032, wherein the third acquiring element 1031 is configured to acquire an ID of a request node, and the third judging element 1032 is configured to compare the ID of the request node with a corresponding node ID in a binding cache item of the anchor, and if they are different, determine that there is access of another new access interface. In the present application, a node sends a request message for applying to join the multicast group by a request message. The request message may be an access request message of a new interface of the node or a new Join Group request message of an MN according to a state of a node interface, and these messages are request messages for requesting for joining the multicast group, and the judging component 103 judges, according to the request message, whether there is access of another new access interface.

In the present application, the identifying component 101 may mainly compare AG care-of addresses to identify a set of nodes sharing the same AG with a current request node requesting for joining the multicast group, and may specifically, further include the following elements: a first acquiring element 1011 and a first judging element 1012, wherein the first acquiring element 1011 is configured to acquire AG care-of addresses of access interfaces of nodes in the multicast group from binding cache items of the anchor; and the first judging element 1012 is configured to judge, according to the AG care-of addresses, whether the nodes in the multicast group share the same AG, while the identifying component 101 mainly judges, according to multicast group messages of the nodes, whether the nodes in the multicast group request for the same multicast group data. Specifically, the identifying component 101 may further include: a second acquiring element 1013 and a second judging element 1014, wherein the second acquiring element 1013 is configured to acquire multicast group data of the nodes in the multicast group from a table of corresponding relations between IDs of the binding cache items of the anchor and multicast group IDs; and the second judging element 1014 is mainly configured to judge, according to the multicast group data, whether the nodes in the multicast group request for the same multicast group data.

Functions of components that constitute the anchor 10 in the present application and a method for optimizing the multicast group provided by the present application will be expounded below with reference to the accompanying drawings.

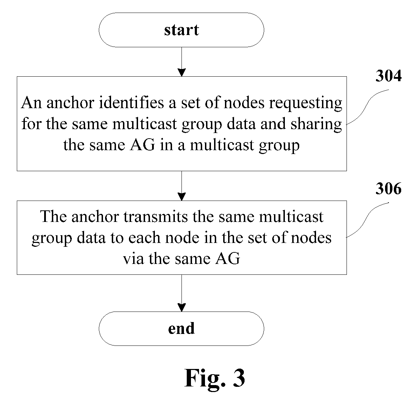

Please refer to Fig. 3, a method for optimizing a multicast group is further provided in the present application, including the following blocks.

In block 304: An anchor identifies a set of nodes requesting for the same multicast group data and sharing the same AG in a multicast group, and block 306 is performed.

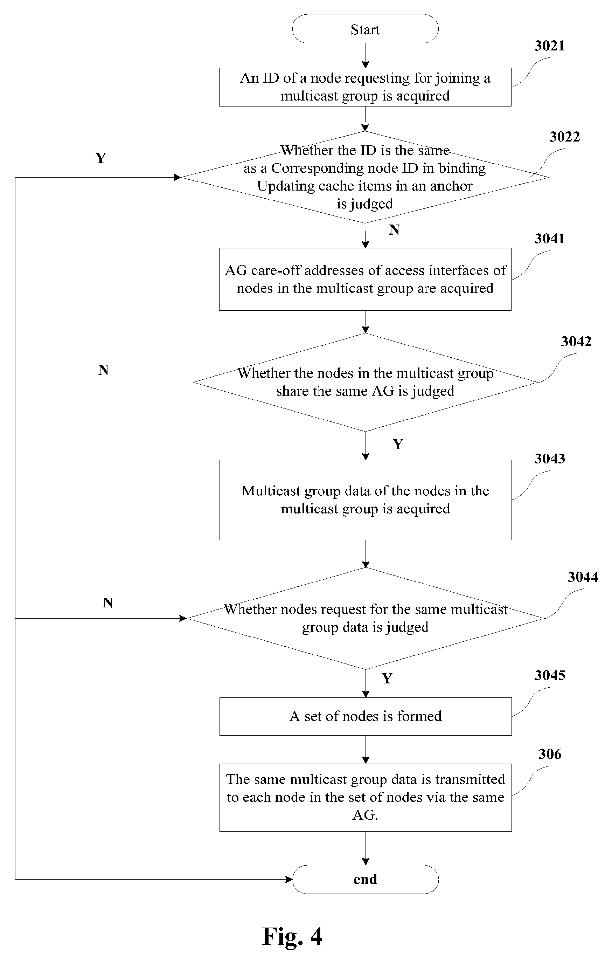

In the present block, the identifying component 101 identifies gateway addresses so as to identify nodes sharing the same AG with a request node currently requesting for joining the multicast group, and identifies whether the nodes request for the same multicast group data. Specifically, block 304 may further include the following sub-blocks with reference to Fig. 4.

In block 3041: AG care-off addresses of access interfaces of nodes in the multicast group are acquired from binding cache items of the anchor.

In the present block, the first acquiring element 1011 acquires first AG care-off addresses of the access interfaces of the nodes in the multicast group from binding cache items of the anchor.

In block 3042: Whether the nodes in the multicast group share the same AG is judged according to the AG care-off addresses.

In the present block, the first judging element 1012 compares the acquired AG care-off addresses corresponding to the access interfaces of the nodes to find nodes sharing the same AG, and block 3043 is performed.

In block 3043: For block 3042, multicast group data of the nodes sharing the same AG is acquired from a table of corresponding relations between IDs of the binding cache items of the anchor and IDs of the multicast group.

In the present block, the second acquiring element 1013 is responsible for inquiring a table of corresponding relations between IDs of the nodes found by the first judging element 1012 and IDs of the multicast group to acquire respective multicast group data of the nodes. The second acquiring element 1013 specifically inquires the table of the corresponding relations between the IDs and the IDs of the multicast group according to the IDs of the nodes to acquire multicast group data of the nodes in the set of nodes, wherein the table of the corresponding relations is generated by extending binding cache items maintained by the anchor. In other words, table entries of correspondence between the IDs of the nodes and IDs of multicast groups which the node join are added into the binding cache items and the binding cache items are updated in real time.

In block 3044: Whether nodes request for the same multicast group data is judged according to the acquired multicast group data.

In the present block, the second judging element 1014 compares the acquired multicast group data of the nodes so as to acquire nodes requesting for the same multicast group data. The comparison process in the present block aims to enable an AG to maximize utilization of multicast data thereof, so as to transmit as much multicast data as possible to more nodes, thus the multicast group data may be transmitted to the nodes in the set of nodes via the same AG after the set of nodes is matched.

In block 3045: the Nodes acquired in block 3044 are acquired to form the set of nodes.

AGs of the nodes in the multicast group are judged firstly, then whether the same multicast group data is requested is judged in the present embodiment, while in another embodiment, whether the same multicast group data is requested may be judged first, and then whether acquired nodes share the same AG is judged. In other words, block 3043 to block 3045 may be performed prior to block 3041, which does not affect the acquisition of the set of nodes in the present embodiment.

In block 306: The anchor transmits the same multicast group data to each node in the set of nodes via the same AG.

In the present block, the transmitting component 102 is configured to transmit multicast data to the nodes by the same AG shared by the nodes in the set of nodes.

Please refer to Fig. 4, the present application may further include block 302 before block 304.

In block 302: Whether a node is accessed by another new access interface is judged according to received request message of the node.

In the present block, the judgment is specifically performed by the judging component 103, and specifically, the present block is completed by the following sub-blocks.

In block 3021: An ID of the node is acquired.

In the present block, the third acquiring element 1031 acquires the ID of the node.

In block 3022: Whether the acquired ID is the same with a corresponding node ID in a binding cache item of the anchor is judged, if so, block 304 is performed, and otherwise, the present flow is terminated.

In the present block, the third judging element 1032 compares the corresponding node ID in the binding cache item with the acquired ID of the request node to judge whether there is a new access interface requesting for access or an interface originally connected to a network requesting for multicast data.

Besides, after block 306 is performed, block 308 may be also performed.

In block 308: A multicast forwarding tree is updated.

In the present block, the anchor deletes, from a multicast forwarding tree, an interface or a node or an AG without multicast data, thereby reducing the scale of the multicast forwarding tree and reducing waste of resources of a network side to the largest extent.

By means of such a multicast routing selection method, the present application avoids the necessity of repeated transmission of multicast data of the anchor to gateways corresponding to the nodes, and it is only necessary to transmit a copy of the multicast data to the same AG shared by the nodes in the set of nodes and the AG then forwards the multicast data to the nodes, thereby saving cost of the network side to the largest extent.

The method for optimizing the multicast group in the present application will be expounded below according to three specific embodiments.

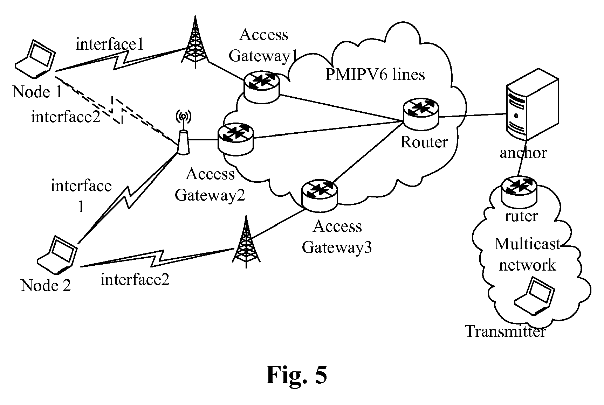

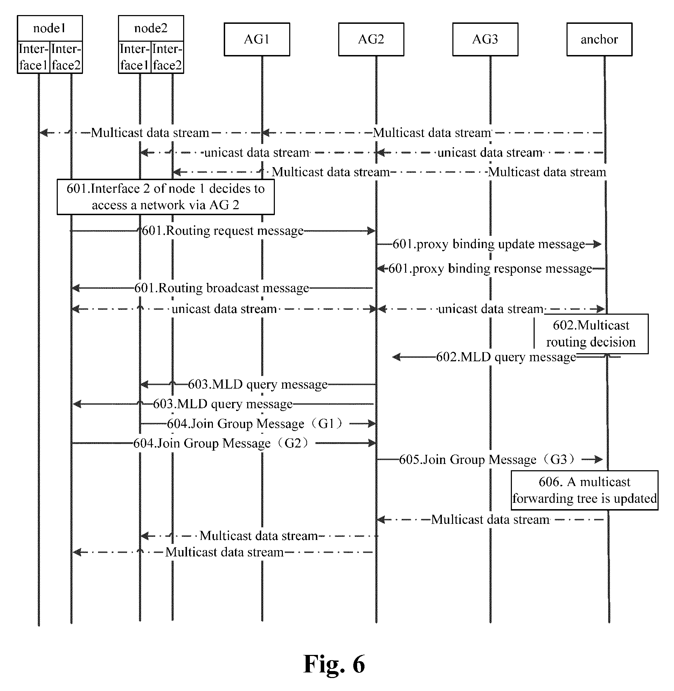

Please refer to Fig. 5 and Fig. 6, in the present embodiment, node MN1 and node MN2 have two interfaces IF1 and IF2 respectively in a PMIPv6 domain, wherein interface IF1 of node MN1 accesses a network via AG 1, and interface IF1 of node MN2 accesses the network via AG 2, IF2 accesses the network via AG 3, there multicast data is transmitted in MN1-IF1←AG 1←anchor and in MN2-IF2←AG 3←anchor, and node MN1 decides to access interface IF2 to the network via AG 2. In this scenario, a multicast routing optimization technique may be implemented as follows.

In block 601: Node MN1 enters the coverage of AG 2, and accesses interface IF2 to the PMIP domain via AG 2 according to RFC5213.

In block 602: After receiving a Proxy Binding Update (PBU) message transmitted by an AG, the anchor extracts related information therein, and determines a policy of the multicast routing optimization. The anchor judges that MN1-IF2 and MN2-IF1 share the same AG 2 and the two nodes have the same multicast group information, and decides to use MN1-IF2 to transmit multicast data to be transmitted to MN1, and use MN2-IF1 to transmit multicast data to be transmitted to MN2 and transmits a Multicast Listener Discovery (MLD) proxy request message to AG 2 at the same time wherein the MLD proxy request message includes an MN-ID of new access interface MN1, an MN-ID of MN2 and information of multicast groups that MN1 and MN2 join and so on.

In block 603: When receiving the MLD proxy request message transmitted by the anchor, AG 2 first checks whether the MN has a network interface having a created connection with the AG, and if no, the optimization is terminated. Otherwise, AG 2 will transmit the MLD proxy request message via MN1-IF2 and MN2-IF1.

In block 604: After receiving the MLD proxy request message transmitted by the anchor, MN1 and MN2 will transmit the Join Group message to AG 2 via their interfaces that receive the MLD proxy request message respectively, the Join Group messages including multicast group information received by the two nodes.

In block 605: After receiving the Join Group messages from MN1 and MN2, AG 2 will check the multicast group information therein while transmitting the multicast group information of the two interfaces to the anchor. The multicast group information includes the MN-ID of the node and multicast group information that the node needs to receive.

In block 606: After receiving the Join Group message transmitted by AG 2, the anchor extracts multicast group information therein, updates binding cache items maintained by the anchor while updating a multicast forwarding tree, adds interface MN1-IF2 to a multicast tree. If there is no multicast data on interface IF1, IF1 is deleted from the multicast tree, and if there is no node for receiving multicast data on AG 3, AG 3 is deleted from the multicast tree.

In Fig. 6, G1 represents a multicast group ID, G2 represents a multicast group ID, and G3 represents an ID of node 1, an ID of node 2 and a multicast group ID.

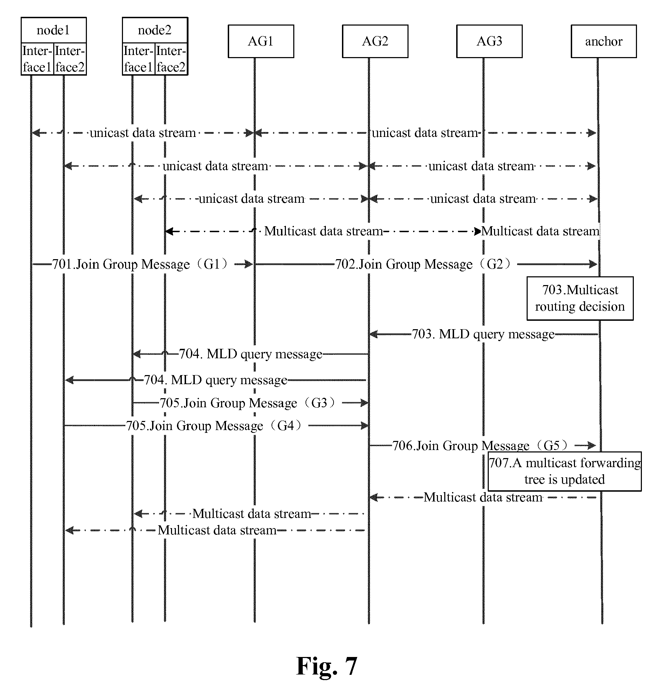

Please refer to Fig. 5 and Fig. 7, in the present embodiment, interface IF1 of node MN1 accesses a network via AG 1, IF2 accesses the network via AG 2, interface IF1 of node MN2 accesses the network via AG 2, IF2 accesses the network via AG 3, and multicast data received by MN2 is transmitted via MN2-IF2←AG 3←anchor. If node MN1 needs to join some multicast groups at the moment, node MN1 may request for the multicast data via IF1 or IF2 since MN1 has a plurality of network interfaces. When the multicast data is requested via IF1, a multicast routing optimization technique mainly has the following characteristics.

In block 701: Node MN1 transmits to AG 1 a Join Group message via IF1 and the Join Group message includes multicast information that MN1 expects to receive.

In block 702: After receiving the Join Group message transmitted by MN1-IF1, AG 1 reads a strategy file to acquire an MN Identifier (MN-ID), and transmits to an anchor a multicast routing request message including an MN-ID of MN1 and the multicast information that MN1 expects to receive.

In block 703: After receiving the multicast routing request message transmitted by AG 1, the anchor extracts related information therein, determines a policy of the multicast routing optimization, acquires through analysis that both MN1-IF2 and MN2-IF1 perform access through AG 2 and have the same multicast group information, then decides to use MN1-IF2 to transmit multicast data transmitted to MN1, and use MN2-IF1 to transmit multicast data transmitted to MN2, and transmits to AG 2 an MLD proxy request message including the MN-ID of MN1, an MN-ID of MN2 and information of multicast groups that MN1 and MN2 join, and so on.

In block 704: After receiving the MLD proxy request message transmitted by the anchor, AG 2 first checks whether the node has a network interface having a created connection with the AG, and if it is found that the node does not have an associated network interface, the optimization is terminated. Otherwise, AG 2 will transmit the MLD proxy request message to MN1-IF2 and MN2-IF1 respectively.

In block 705: After receiving the MLD proxy request message transmitted by AG 2, MN1 and MN2 will transmit to AG 2 Join Group messages including the information of the multicast groups that MN1 and MN2 join respectively.

In block 706: After receiving the Join Group messages from MN1 and MN2, AG 2 will check multicast group information therein, while adding the multicast group information of the two interfaces in a Join Group message and transmits the Join Group message to the anchor.

In block 707: After receiving the Join Group message transmitted by AG 2, the anchor extracts multicast group information therein, updates binding cache items maintained by the anchor while updating a multicast forwarding tree, adds interface MN1-IF2 to a multicast tree. If there is no multicast data on interface IF1, IF1 is deleted from the multicast tree, and if there is no node for receiving multicast data on AG 3, AG 3 is deleted from the multicast tree.

In Fig. 7, G1 represents a multicast group ID, G2 represents an ID of node 1 and a multicast group ID, G3 represents a multicast group ID, G4 represents a multicast group ID, G5 represents an ID of node 1, an ID of node 2 and a multicast group ID.

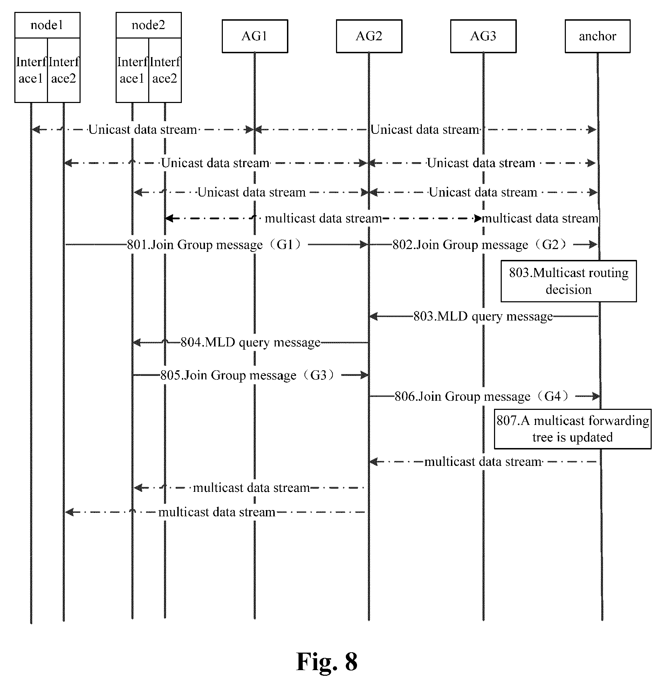

Please refer to Fig. 5 and Fig. 8, in the present embodiment, interface IF1 of node MN1 accesses a network via AG 1 and IF2 accesses the network via AG 2, interface IF1 of MN2 accesses the network via AG 2 and IF2 accesses the network via AG 3, and multicast data received by MN2 is transmitted via MN2-IF2←AG 3←anchor. If MN1 needs to join some multicast groups at the moment, MN1 may request for the multicast data via IF1 or IF2 since MN1 has a plurality of network interfaces. When the multicast data is requested via IF2, a multicast routing optimization technique mainly has the following characteristics.

In block 801: An MN transmits a Join Group message to AG 2 via MN1-IF2, and the Join Group message includes multicast group information that MN1 expects to receive.

In block 802: After receiving the Join Group message transmitted by IF2, AG 2 reads a strategy file to acquire an MN-ID, and transmits to an anchor a Join Group message including an MN-ID of MN1 and the multicast information that MN1 expects to receive.

In block 803: After receiving a multicast routing request message transmitted by AG 2, the anchor extracts related information therein, determines a policy of multicast routing optimization, acquires through analysis that both MN1-IF2 and MN2-IF1 perform access through AG 2 and have the same multicast group information, then decides to use MN1-IF2 to transmit multicast data transmitted to MN1, and use MN2-IF1 instead of MN2-IF2 to transmit multicast data transmitted to MN2, and transmits to AG 2 an MLD proxy request message including an MN-ID of MN2 and information of a multicast group that MN2 joins and so on.

In block 804: After receiving the MLD proxy request message transmitted by the anchor, AG 2 first checks whether the anchor has a network interface having a created connection with the AG, and if it is found that the node does not have an associated network interface, the optimization is terminated. Otherwise, AG 2 will transmit the MLD proxy request message to MN2-IF1.

In block 805: After receiving the MLD proxy request message transmitted by AG 2, MN2 will transmit to AG 2 a Join Group message including the information of the multicast group that MN2 joins.

In block 806: After receiving the Join Group message from MN2, AG 2 will check multicast group information therein, and transmits the Join Group message to the anchor while adding the multicast group information of the interface in the Join Group message.

In block 807: After receiving the Join Group message transmitted by AG 2, the anchor extracts multicast group information therein, updates binding cache items maintained by the anchor while updating a multicast forwarding tree, adds interface MN1-IF2 to a multicast tree. If there is no multicast data on interface IF1, IF1 is deleted from the multicast tree, and if there is no node for receiving multicast data on AG 3, AG 3 is deleted from the multicast tree.

In Fig. 8, G1 represents a multicast group ID, G2 represents an ID of node 1, and a multicast group ID, G3 represents a multicast group ID, and G4 represents an ID of node 2 and a multicast group ID.

To sum up, an anchor performs routing decision to optimize multicast routing in three different scenarios in a PMIPv6 domain according to the embodiments of the disclosure. Since the scenarios are only designed with 3 AGs and 2 nodes in the present application, thus resulting in relatively limited optimization effect. However, there is lots of such routing that may be optimized in practical network deployment, and extremely evident optimization effect may be brought, which may greatly save cost of a network side.

The contents above are further detailed description made for the disclosure in combination with specific embodiments, and it should not be considered that the specific embodiments of the disclosure are limited to these descriptions. For those of ordinary skill in the art, several simple deductions or replacements may be also made without departing from the conception of the disclosure, and they should be considered as being within the protection scope of the disclosure.

## Claims

1. A method for optimizing multicast group, comprising:
identifying, by an anchor, a set of nodes requesting for the same multicast group data and sharing the same Access Gateway (AG) in a multicast group,
wherein the set of nodes comprises at least two nodes requesting for the same multicast group data and sharing the same AG;
transmitting, by the anchor, the same multicast group data to each node in the set of nodes via the same AG.

2. The method for optimizing the multicast group according to claim 1, wherein at least one node in the set of nodes has two or more access interfaces, and the two or more access interfaces are connected to different AGs respectively.

3. The method for optimizing the multicast group according to claim 1, wherein identifying, by the anchor, the nodes sharing the same AG in the multicast group comprises:
acquiring AG care-of addresses of access interfaces of the nodes in the multicast group from binding cache items of the anchor;
judging, according to the AG care-of addresses, whether the nodes in the multicast group share the same AG.

4. The method for optimizing the multicast group according to any one of claims 1 to 3, wherein identifying, by the anchor, the nodes requesting for the same multicast group data in the multicast group comprises:
acquiring multicast group data of the nodes in the multicast group from a table of corresponding relations between Identifiers (ID) of the binding cache items of the anchor and multicast group IDs; and
judging, according to the multicast group data, whether the nodes in the multicast group request for the same multicast group data.

5. The method for optimizing the multicast group according to any one of claims 1 to 3, wherein before the anchor identifies, the set of nodes requesting for the same multicast group data and sharing the same AG in the multicast group, the method further comprises:
judging, according to received request information from each node of the set of nodes, whether the each node of the set of nodes is accessed by another new access interface.

6. An anchor, comprising an identifying component and a transmitting component, wherein
the identifying component is configured to identify a set of nodes requesting for the same multicast group data and sharing the same Access Gateway (AG) in a multicast group, wherein the set of nodes comprises at least two nodes requesting for the same multicast group data and sharing the same AG; and the transmitting component is configured to transmit the same multicast group data to each node in the set of nodes via the same AG.

7. The anchor according to claim 6, wherein at least one node in the set of nodes has two or more access interfaces, and the two or more access interfaces are connected to different AGs.

8. The anchor according to claim 6, wherein the identifying component further comprises a first acquiring element and a first judging element;
the first acquiring element is configured to acquire AG care-of addresses of access interfaces of the nodes in the multicast group from binding cache items of the anchor; and
the first judging element is configured to judge, according to the AG care-of addresses, whether the nodes in the multicast group share the same AG.

9. The anchor according to any one of claims 6 to 8, wherein the identifying component further comprises: a second acquiring element and a second judging element;
the second acquiring element is configured to acquire multicast group data of the nodes in the multicast group from a table of corresponding relations between Identifiers (ID) of the binding cache items of the anchor and multicast group IDs; and
the second judging element is configured to judge, according to the multicast group data, whether the nodes in the multicast group request for the same multicast group data.

10. The anchor according to any one of claims 6 to 8, wherein the anchor further comprises: a judging component; and the judging component is configured to judge, according to received request information from each node of the set of nodes, whether the each node of the set of nodes is accessed by another new access interface.
